**Europäisches Patentamt**

**European Patent Office**

**Office européen des brevets**

(11) Veröffentlichungsnummer: **0 312 056 B1**

(12) # EUROPÄISCHE PATENTSCHRIFT

(45) Veröffentlichungstag der Patentschrift:
14.08.91 Patentblatt 91/33

(51) Int. Cl.⁵: **B23H 7/04, G01D 5/34**

(21) Anmeldenummer: **88117034.4**

(22) Anmeldetag: **13.10.88**

(54) **Funkenerosionsmaschine.**

(30) Priorität: 13.10.87 DE 3734677

(43) Veröffentlichungstag der Anmeldung:
19.04.89 Patentblatt 89/16

(45) Bekanntmachung des Hinweises auf die
Patenterteilung:
14.08.91 Patentblatt 91/33

(84) Benannte Vertragsstaaten:
**CH DE FR GB IT LI LU SE**

(56) Entgegenhaltungen:
**FR-A- 1 580 820**
**FR-A- 2 565 216**

(73) Patentinhaber: **AG für industrielle Elektronik
AGIE Losone bei Locarno
CH-6616 Losone/Locarno (CH)**

(72) Erfinder: **Beltrami, Ivano, Dr.
Via Mariani la
CH-6600 Muralto (CH)**
Erfinder: **Wehrli, Peter
Casa Maestretti
CH-6653 Verscio (CH)**
Erfinder: **Bertholds, Axel, Dr.
Saars 85
CH-2000 Neuchâtel (CH)**

(74) Vertreter: **EGLI-EUROPEAN PATENT
ATTORNEYS
Widenmayerstrasse 5
W-8000 München 22 (DE)**

EP 0 312 056 B1

## Beschreibung

Die Erfindung bezieht sich auf eine Funkenerosionsmaschine mit einer Laufdrahtelektrode und einer optischen Meßeinrichtung zur Messung der Auslenkung der Laufdrahtelektrode, wobei die Meßeinrichtung eine Lichtquelle, eine Sensoranordnung zur Messung des durch die Laufdrahtelektrode abgeschatteten Lichtstrahls der Lichtquelle und eine der Sensoranordnung nachgeschaltete Auswerteschaltung aufweist.

Eine derartige Elektroerosionsmaschine ist aus der DE-PS 2826270 bekannt. Diese bekannte Anordnung weist für jede Meßebene eine Lichtquelle sowie zwei in Richtung des Lichtstrahles hinter der Laufdrahtelektrode angeordnete Sensorelemente auf. Diese Sensorelemente liegen seitlich im Abstand zueinander. Solange sich die Laufdrahtelektrode in einer Null-Lage befindet, fällt deren Schatten zwischen die beiden Sensorelemente, so daß beide beleuchtet sind und ein elektrisches Signal erzeugen. Bei einer Auslenkung der Laufdrahtelektrode um ein vorbestimmtes Mindestmaß, wird eines der beiden Sensorelemente von der Laufdrahtelektrode abgeschattet, so daß aus dem sich ändernden Ausgangssignal dieses Sensorelementes auf die Verschiebung des Erosionsdrahtes aus der Null-Lage geschlossen werden kann. Mit dieser bekannten Anordnung kann man primär feststellen, ob sich die Laufdrahtelektrode in ihrer Null-Lage befindet oder nicht. Eine präzise Messung der Auslenkung ist jedoch bestenfalls nur in einem sehr engen Meßbereich möglich, dort allerdings nicht erforderlich, da eine Regelung der Lage des Erosionsdrahtes nur bezüglich der Null-Lage des Sensors erfolgt, womit aber Schneidfehler nicht vermieden werden.

Eine ähnliche Elektroerosionsmaschine ist aus der JP-OS 51-137193 bekannt. Dort besteht die Sensoranordnung aus einer Gruppe von parallel nebeneinander liegenden Lichtleitfasern, die von einer Lichtquelle mit Licht versorgt werden. Auch hier liegt die Laufdrahtelektrode zwischen der Lichtquelle und den Lichtleitfasern. An jede Lichtleitfaser ist ein photoelektrisches Wandlerelement angeschlossen, das seinerseits jeweils an eine Summationsschaltung angeschlossen ist, die ein Ausgangssignal erzeugt, wenn zumindest eine vorbestimmte Anzahl von Lichtleitfasern von der Lichtquelle bestrahlt wird. Solange die Laufdrahtelektrode in einer Soll-Lage ist, deckt ihr Schatten eine so große Anzahl von Lichtleitelementen ab, daß die Summationsschaltung nicht anspricht. Wenn die Laufdrahtelektrode aus dem Erfassungsbereich dieser Sensoranordnung ausgelenkt wird, werden sämtliche Lichtleitfasern von der Lichtquelle beschienen, so daß es zu einem Ansprechen der Summationsschaltung kommt. Das Ausgangssignal der Summationsschaltung gibt also ebenfalls nur an, ob die Laufdrahtelektrode innerhalb ihres Sollbereiches liegt oder nicht.

Optische Meßeinrichtungen, die die Kontur eines Gegenstandes abtasten, sind auf anderen Gebieten der Technik bekannt, beispielsweise aus der DE-OS 1930111, US-PS 3,901,604, DE-OS 2646674. Dort wird allerdings nicht im Schattenwurfverfahren gearbeitet. Vielmehr wird entweder die Auslenkung eines Lichtstrahles gemessen (US 3,901,604) oder es wird eine an dem zu messenden Gegenstand aufgebrachte Markierung optisch abgetastet (DE-OS 2646674, DE-OS 1930111), wobei diese Markierung gegenüber dem Hintergrund des zu vermessenden Gegenstandes ein anderes Absorptions- bzw. Reflektionsvermögen hat.

Zum technischen Hintergrund wird auch noch auf folgende Druckschriften hingewiesen : JP-AS 58-217225, JP-OS 60-29231, JP-OS 57-178618, JP-OS 60-221221 und JP-OS 59-142021.

Seit einiger Zeit sind auf dem Markt zylindrische Linsen mit einer parabolischen Verteilung des Brechungsindex bekannt. Diese Linsen haben im Prinzip dieselben optischen Eigenschaften wie herkömmliche sphärische Linsen mit dem zusätzlichen Vorteil, daß ihre Endflächen eben sind. Diese Linsen werden bevorzugt zur Einkopplung von Licht in Lichtleitfasern verwendet (vgl. Firmendruckschrift der Firma TS-Optoelectronic, 8000 München 22 mit dem Titel "Selfoc").("Selfoc" ist ein eingetragenes Warenzeichen der Firma Nippon Sheet Glass Co., Ltd.)

Bei der Funkenerosion wird die Laufdrahtelektrode zwar zwischen einem oberen und einem unteren Führungskopf durch Antriebs- und Bremsrollen gespannt, gleichwohl wird sie durch von Funkenentladungen herrührenden Kräften verbogen bzw. ausgelenkt. Je höher die Schnittgeschwindigkeiten beim Drahterodieren sind, desto größer werden die auf die Laufdrahtelektrode wirkenden Kräfte, die eine Auslenkung hervorrufen. Durch diese Auslenkungen, die heute in der Größenordnung von 200 bis 400 μm liegen, wird die Genauigkeit der Schnittlinien beeinträchtigt. Dies macht sich besonders dann bemerkbar, wenn gekrümmte Konturen erodiert werden sollen und insbesondere, wenn eine möglichst präzise Ecke geschnitten werden soll. Es ergeben sich dann die bekannten "Eckenfehler". Diese Eckenfehler werden im wesentlichen dadurch bedingt, daß die Laufdrahtelektrode entgegengesetzt zur Vorschubrichtung ausgelenkt wird.

Bisher hat man versucht, diese Eckenfehler dadurch zu verringern, daß man die mechanische Zugspannung der Laufdrahtelektrode vergrößerte oder daß die Vorschubgeschwindigkeit beim Schneiden von Ecken verringert wurde, eventuell bei gleichzeitiger Änderung weiterer Parameter wie z.B. der Generatorleistung. Da andererseits heute immer höhere Schnittgeschwindigkeiten verlangt werden, ist dieses Verlangsamen des Vorschubes nicht mehr hinnehmbar.

Wesentliches Ziel der Erfindung ist es, die Elektroerosionsmaschine dahingehend zu verbessern, daß

2

Eckenfehler auch bei hoher Schnittgeschwindigkeit vermieden werden. Dabei geht die Erfindung von der Erkenntnis aus, daß Auslenkungen der Laufdrahtelektrode unvermeidbar sind. Daher ist es ein weiteres Ziel der Erfindung, diese Auslenkungen möglichst präzise zu erfassen und dann die Vorschubdaten für die Relativbewegung zwischen Werkstück und Laufdrahtelektrode entsprechend diesen Auslenkungen zu korrigieren.

Dabei ist zu beachten, daß die schädlichen Auslenkungen im Inneren des Werkstückes auftreten, wo eine meßtechnische Erfassung nicht möglich ist. Die Erfindung mißt daher die Auslenkung der Laufdrahtelektrode in einem Bereich zwischen einer Drahtführung und dem Werkstück.

Aus der dort gemessenen Auslenkung kann man dann auf die im Inneren des Werkstückes auftretende maximale Auslenkung der Laufdrahtelektrode rückschließen.

Die oben genannten Ziele bzw. Aufgaben werden erfindungsgemäß dadurch gelöst, daß die Sensoranordnung so ausgebildet ist, daß sie eine von der relativen Lage der Laufdrahtelektrode umkehrbar eindeutig abhängige Lichtmenge absorbiert.

Vorteilhafte Ausgestaltungen und Weiterbildungen der Erfindung sind den Unteransprüchen zu entnehmen.

Nach einer bevorzugten Weiterbildung der Erfindung hat eine das Licht absorbierende wirksame Fläche der Sensoranordnung eine sich streng monoton ändernde geometrische Gestalt. Hierdurch wird ein umkehrbar eindeutiger Zusammenhang (in mathematischem Sinn) zwischen der Auslenkung der Laufdrahtelektrode und der absorbierten Lichtmenge erreicht.

Eine besonders günstige Form der sich streng monoton ändernden geometrischen Gestalt ist die geometrische Gestalt eines Dreieckes, bei dem der Zusammenhang zwischen absorbierter Lichtmenge und Auslenkung der Laufdrahtelektrode linear ist.

Die Erfindung läßt sich in verschiedenen Ausführungsformen realisieren. Ein erstes Ausführungsbeispiel verwendet unmittelbar photoempfindliche Elemente mit dreieckförmiger Gestalt. Ein zweites Ausführungsbeispiel verwendet ein Bündel von Lichtleitfasern, die in einer Auftreffebene des Lichtes zur Form eines Dreieckes zusammengefaßt sind. Ein drittes Ausführungsbeispiel der Erfindung sieht optische Einrichtungen vor, die einen dreieckförmigen Ausschnitt des Lichtbündels durchlassen. Ausgestaltungen dieses Ausführungsbeispieles verwenden eine dreieckförmige Blende, eine dreieckförmige Linse oder eine Linse mit vorgeschaltetem dreieckförmigem Filter.

Eine Erhöhung der Meßempfindlichkeit erhält man dadurch, daß zwei oder mehrere Meßanordnungen von dem Lichtstrahl beschienen und von dem Schatten der Laufdrahtelektrode lokal abgedunkelt werden. Eine besonders platzsparende Variante verwendet hierbei zwei Dreiecke, die gegenläufig ausgerichtet sind. Werden rechtwinklige Dreiecke verwendet, so liegen dabei ihre Hypotenusen aneinander bzw. parallel zueinander in der Eintrittsebenen der Sensoranordnung.

Da die Meßanordnung im Wirkungsbereich der Spülflüssigkeit der Elektroerosionsmaschine angeordnet ist, wo elektrische Phänomene der Funkenerosion elektrische Störungen verursachen und dort auch hohe Flüssigkeitsdrücke von beispielsweise 15 bar vorliegen, ist es besonders günstig, wenn keine elektrischen Bauelemente oder elektrische Leitungen in diesen Bereich führen. Aus diesem Grunde ist besonders bevorzugt, das Licht der Lichtquelle und auch das gemessene Licht der Sensoranordnung mittels Lichtleitfasern zu- bzw. abzuführen, womit die elektrischen Bauteile weit außerhalb des Meßbereiches angeordnet werden können. Besonders günstig ist dann der Einsatz von zylindrischen Linsen mit parabolisch verteiltem Brechungsindex, da diese Linsen einerseits ein über Lichtleiter eingekoppeltes Licht zu einem parallelen, homogenen Lichtstrahl formen können und andererseits parallele, auftreffende Lichtstrahlen in ihrer ebenen Austrittsfläche fokussieren können, an die im Fokus ein Lichtleiter angekoppelt ist. Ist eine solche Linse für den Sensor dreieckförmig geschliffen und zwar so, daß ihre optische Achse und ihr Fokus noch im verbleibenden Körper vorhanden sind, so ist die im Fokus austretende Lichtmenge linear von der Lage des Schattens der Laufdrahtelektrode abhängig. Auch hier ist es möglich, zwei solcher Linsen aneinanderzulegen und zwar so, daß ihre optischen Achsen parallel zueinander laufen.

Bei einer anderen Variante der Verwendung solcher Linsen wird die Auftrefffläche des Lichtes so abgedunkelt, beispielsweise durch eine Blende oder einen Abdecklack, daß nur ein dreieckförmiger Bereich lichtdurchlässig ist.

Bei einer Variante mit zwei dreieckförmigen Bereichen werden auf der Auftreffebene des Lichtes zwei dreieckförmige Filter angeordnet, die jeweils bestimmte Lichtwellenlängen durchlassen oder ausfiltern. Verwendet man dann eine Lichtquelle mit zwei auf die Filter abgestimmten Wellenlängen und am Ausgang dieser Linse einen Strahlteiler für die beiden Wellenlängen, so erhält man zwei Teistrahlen, deren Intensität wiederum ein direktes Maß für die Lage des Schattens der Laufdrahtelektrode ist.

Weitere vorteilhafte Ausgestaltungen und Weiterbildungen der Erfindung sind der nachfolgenden Figurenbeschreibung zu entnehmen. In den Figuren zeigt :

Fig. 1    eine Draufsicht auf eine erste Ausführungsform einer photoelektrischen Sensoranordnung ;

Fig. 2    eine zweite Ausführungsform der photoelektrischen Sensoranordnung ;

Fig. 3    eine schematische Darstellung der photoelektrischen Sensoranordnung mit Photodioden und einer nachgeschalteten Summationsschaltung ;

Fig. 4    eine Ausführungsform einer Auswerteschaltung für die Sensoranordnung ;

Fig. 5    eine schematische Darstellung einer Elektroerosionsmaschine mit der photoelektrischen Sensoranordnung ;

Fig. 6    eine Schnittansicht einer dritten Ausführungsform der photoelektrischen Sensoranordnung ;

Fig. 7    eine perspektivische Ansicht der Sensoranordnung der Fig. 6 ;

Fig. 8    eine Vorderansicht einer weiteren Ausführungsvariante des Ausführungsbeispieles der Fig. 6 und 7 ;

Fig. 9    eine schematische Seitenansicht einer Sensoranordnung nach einem vierten Ausführungsbeispiel der Erfindung ; und

Fig. 10   eine Vorderansicht des Ausführungsbeispieles der Fig. 9 mit zwei Wellenlängenfiltern.

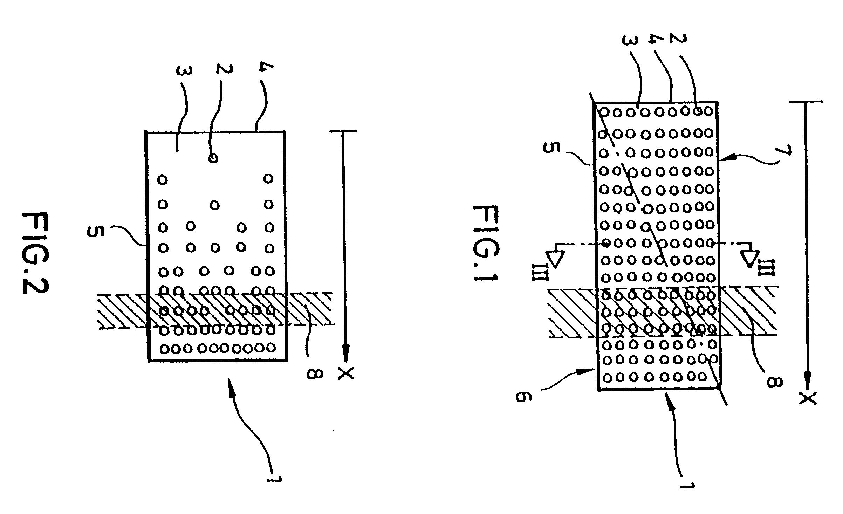

Fig. 1 zeigt ein erstes Ausführungsbeispiel einer Sensoranordnung 1, die bei der Erfindung zur Anwendung kommt. Diese Sensoranordnung 1 umfaßt eine Vielzahl von Lichtleitfasern 2, die in ihrer gegenseitigen parallelen Lage durch eine Kunststoffplatte 3 gehalten sind. Die Enden der Lichtleitfasern sind fest in der Kunststoffplatte gehalten. Diese Kunststoffplatte 3 hat eine Breitseite 4 und eine Längsseite 5. Die Lichtleitfasern 2 sind in eine erste Gruppe 6 und eine zweite Gruppe 7 unterteilt, die voneinander durch die Diagonale der im wesentlichen rechtwinkligen Kunststoffplatte 3 getrennt sind. Eine in Fig. 1 nicht dargestellte Lichtquelle beleuchtet mit einem parallelen Lichtbündel mit homogener Intensitätsverteilung sämtliche Lichtleitfasern 2 mit Ausnahme eines Bereiches, der durch einen Schatten 8 der in Fig. 1 nicht dargestellten Laufdrahtelektrode abgedunkelt ist. Dieses parallele Lichtbündel kann durch Lichtleitfasern mit geringem Öffnungswinkel erzeugt werden, in deren eines Ende Licht einer Lichtquelle eingekoppelt wird. Die Anzahl der durch den Schatten abgedunkelten Lichtleitfasern der ersten und der zweiten Gruppe 7 bzw. 6 hängt damit eindeutig von der relativen Lage des Schattens 8 bezogen auf eine Meßrichtung x ab, die durch einen Pfeil in Fig. 1 angedeutet ist und parallel zur Längsseite 5 liegt. Die Lichtleiter der beiden Gruppen 7 und 6 sind jeweils zu Bündeln zusammengefaßt. Da der Lichtstrahl eine homogene Intensitätsverteilung hat, ist die Summe der Lichtintensitäten der einzelnen Lichtleitfasern des jeweiligen Bündels linear abhängig von der Lage des Schattens 8 relativ zur Meßrichtung x. Bei der Gruppe 7 verringert sich diese Intensität linear mit zunehmender Verschiebung des Schattens in der X-Richtung. Bei der Gruppe 6 dagegen wächst die Summe der Intensitäten linear mit der Verschiebung des Schattens in X-Richtung.

Bei der in Fig. 1 gezeigten Ausführungsform ist die Dichte der Lichtleitfasern je Flächeneinheit der Kunststoffplatte 3 konstant.

Im Gegensatz dazu sind bei dem Ausführungsbeispiele gemäß Fig. 2 die Lichtleitfasern mit einer vom Ort in Meßrichtung x abhängigen Dichte angeordnet. Wie aus Fig. 2 zu erkennen ist, enthält diese Ausführungsform nur eine Gruppe von Lichtleitfasern, die in einer in Meßrichtung x linear ansteigenden Dichte angeordnet ist. Somit wird auch bei dem Ausführungsbeispiel gemäß Fig. 2 vom Schatten 8 der Laufdrahtelektrode eine Anzahl von Lichtleitfasern 2 abgeschattet, die vom Ort in Meßrichtung x abhängig ist.

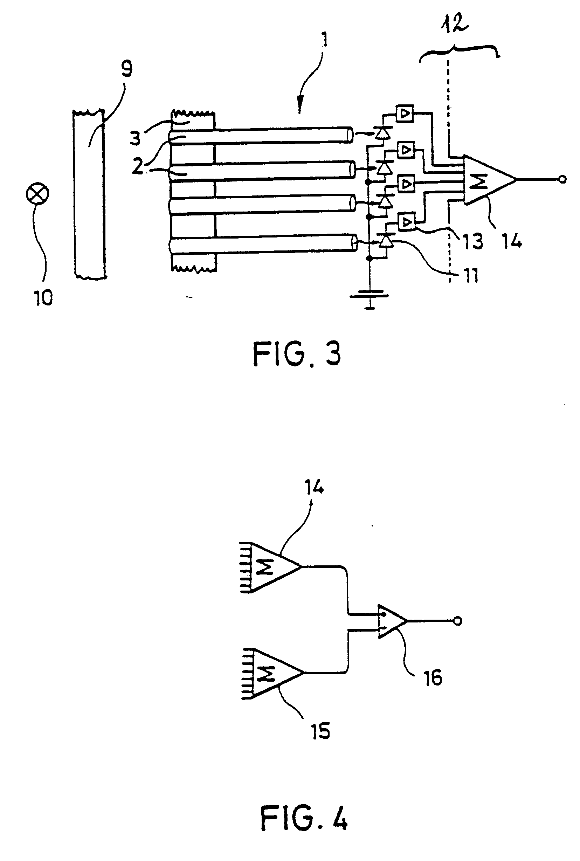

Fig. 3 zeigt eine Schnittdarstellung längs der Linie III-III durch die Sensoranordnung gemäß Fig. 1. Wie in Fig. 3 gezeigt, werden die jeweiligen Lichtleitfasern 2 von der Kunststoffplatte 3 eingefaßt und parallel zueinander gehalten. Die Laufdrahtelektrode 9, deren Auslenkung in der bei Fig. 3 senkrecht zur Zeichenebene liegenden X-Richtung gemessen werden soll, wird von einer schematisch dargestellten Lichtquelle 10 angestrahlt, womit ein Schatten auf die Sensoranordnung 1 abgebildet wird. Generell ist es möglich, alle Lichtleitfasern zu einer einzigen Photodiode zu führen, deren Fläche mindestens der Fläche des Bündels der Lichtfasern entspricht. Dadurch erhält man eine optische Summation des Lichtes der einzelnen Fasern. Im Ausführungsbeispiel der Fig. 3 ist jede einzelne Lichtleitfaser an ihrem der Platte 3 abgewandten Ende mit einer Photodiode 11 gekoppelt. Die Photodioden sind durch eine Spannungsquelle entgegen ihrer Durchlaßrichtung vorgespannt. Die den Einfall des Lichtes auf die jeweilige Lichtleitfaser 2 darstellenden Ausgangssignale der Photodioden 11 werden über Signalverstärker 13 einer Additionsschaltung 14 zugeführt. Das Ausgangssignal der Additionsschaltung 14 ist damit proportional zur Anzahl der Lichtleitfasern, die beleuchtet, d.h. nicht durch die Laufdrahtelektrode 9 abgeschattet sind. Da bei der Sensoranordnung gemäß Fig. 1 nur die Lichtleitfasern 2 einer Gruppe 6 oder 7 an einer Additionsschaltung 14 angekoppelt sind, hängt somit das Ausgangssignal der Additionsschaltung vom Ort der Laufdrahtelektrode in der Meßrichtung x ab.

Wie in Fig. 4 schematisch dargestellt ist, werden ferner die Lichtleitfasern 2 der jeweils anderen Gruppe ebenfalls über Photodioden und Signalverstärker einer weiteren Additionsschaltung 15 zugeführt, deren Ausgangssignal jedoch eine linear abnehmende Abhängigkeit vom Ort des Erosionsdrahtes 9 in der Meßrichtung x hat. Diese bezogen auf die Lage des Schattens in X-Richtung gegenläufigen Ausgangssignale werden einer Subtraktionsschaltung 16 zugeführt, deren Ausgangssignal ein Maß für die relative Auslenkung der Laufdrahtelektrode 9 gegenüber der Sensoranordnung 1 ist.

Zum Eliminieren von Helligkeitsschwankungen der Lichtquelle 10 als auch von anderen Fehlergrößen, die sämtliche Signale in gleicher Weise beeinflussen, kann noch eine Divisionsschaltung vorgesehen sein, in welcher das Ausgangssignal der Subtraktionsschaltung durch die Summe der Ausgangssignale beider Additionsschaltungen 14 und 15 geteilt wird.

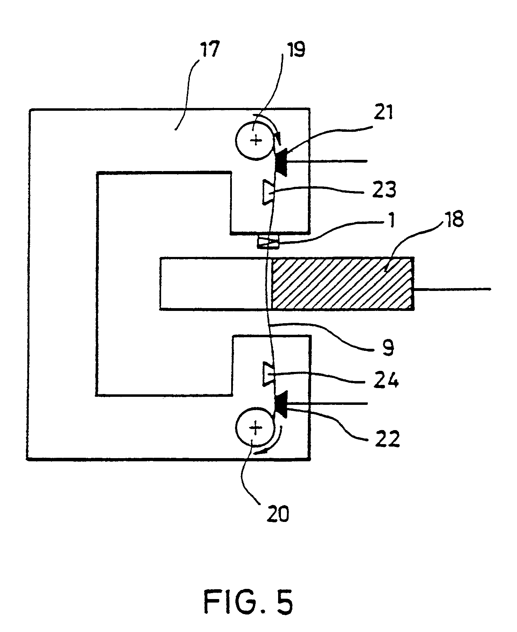

Fig. 5 zeigt schematisch eine Funkenerosionsmaschine 17 zur Erosionsbearbeitung eines Werkstückes 18. Die Funkenerosionsmaschine 17 hat eine Drahtzuführungsrolle 19 und eine Drahtabzugsrolle 20. Über Stromzuführelemente 21 und 22 wird der Laufdrahtelektrode 9 eine Serie von Stromimpulsen eines bestimmten Potentials zugeführt. Das Werkstück 18 ist an das jeweils andere Potential gelegt. Führungselemente 23 bzw. 24 beidseitig des Werkstückes dienen zur genauen Festlegung der Lage der Laufdrahtelektrode 9. Wie in Fig. 5 deutlich gezeigt, ist die Laufdrahtelektrode 9 zwischen den beiden Führungselementen 23 und 24 jedoch nicht geradlinig gespannt sondern bogenförmig ausgelenkt. Zur Erfassung dieser Auslenkung ist die Sensoranordnung an einem möglichst nahe am Werkstück 18 liegenden Ort mit der Erosionsmaschine verbunden und erfaßt die Auslenkung der Laufdrahtelektrode 9 an diesem Ort. Da die Lage der Führungselemente 23 und 24 der numerischen Steuerung der Maschine genau bekannt ist, läßt sich aus der Auslenkung der Laufdrahtelektrode im Meßbereich der Sensoranordnung 1 durch Extrapolation auch die maximale Auslenkung der Laufdrahtelektrode im Inneren des Werkstückes 18 errechnen, woraus sich wiederum Korrektursignale für die numerische Steuerung ermitteln lassen.

Bei den oben beschriebenen Ausführungsbeispielen werden Lichtleitfasern 2 zusammen mit Photodioden 11 als photoelektrische Sensorelemente für die Sensoranordnung 1 verwendet. Obwohl diese Kombination aufgrund der geringen Abmessungen der Lichtleitfasern oder Glasfasern eine äußerst kompakte Bauweise der Sensoranordnung ermöglicht, ist es auch möglich, photoelektrische Wandlerelemente direkt ohne Zwischenschaltung von Lichtleitfasern zum Erfassen des Ortes der in ihrer Lage zu bestimmenden Laufdrahtelektrode verwenden.

Bei den beiden beschriebenen Ausführungsformen variiert in Meßrichtung entweder die Dichte der Sensorelemente bei gleichbleibender Abmessung der Sensoranordnung quer zur Meßrichtung oder es variiert die Breite der Sensoranordnung quer zur Meßrichtung bei gleichbleibender Sensordichte. Selbstverständlich können jedoch auch beide Maßnahmen, nämlich die Variation der Breite der Sensoranordnung senkrecht zur Meßrichtung über deren Länge wie auch die Variation der Dichte der Sensorelemente, also die Anzahl der Sensorelemente pro Flächeneinheit der Sensoranordnung miteinander zur Verstärkung des Lageerfassungssignales kombiniert werden.

Bei dem beschriebenen Ausführungsbeispiel ist eine Summation der Einzelsignale der Photodioden 11, die den einzelnen Glasfasern 2 zugeordnet sind, auf elektrischem Wege vorgenommen. Jedoch können die einzelnen Glasfasern oder Lichtleitfasern auch optisch zusammengeführt werden, wodurch ein optisches Summensignal gebildet wird, das von einem einzigen photoelektrischen Wandlerelement in ein elektrisches Ausgangssignal umgewandelt wird.

Bei dem Ausführungsbeispiel der Fig. 1 werden zwei dreieckförmige Sensoranordnungen mit entgegengesetzter Ausrichtung verwendet. Jedoch kann auch ein einziger, dreieckförmiger Sensor verwendet werden. In diesem Fall ist lediglich die Meßempfindlichkeit der Sensoranordnung verringert.

Bei den bisher beschriebenen Ausführungsbeispielen der Fig. 1 bis 3 ist die Sensoranordnung in eine Mehrzahl von Sensorelementen aufgelöst. Ein eindeutiger Zusammenhang zwischen der Auslenkung der Laufdrahtelektrode 9 gegenüber der Sensoranordnung 1 und dem Ausgangssignal der Messanordnung kann jedoch auch dadurch erzielt werden, daß die Sensoranordnung als dreieckförmige Photozelle oder als dreieckförmige optische Linse oder als optische Linse mit einer dreieckförmigen Maske ausgestaltet ist. Allgemein gesprochen sind dann im Strahlengang des Lichtstrahles optische Einrichtungen vorgesehen, die einen Ausschnitt des Lichtstrahles zur Sensoranordnung durchlassen, wobei dieser Ausschnitt des Lichtstrahles die sich streng monoton ändernde geometrische Gestalt hat.

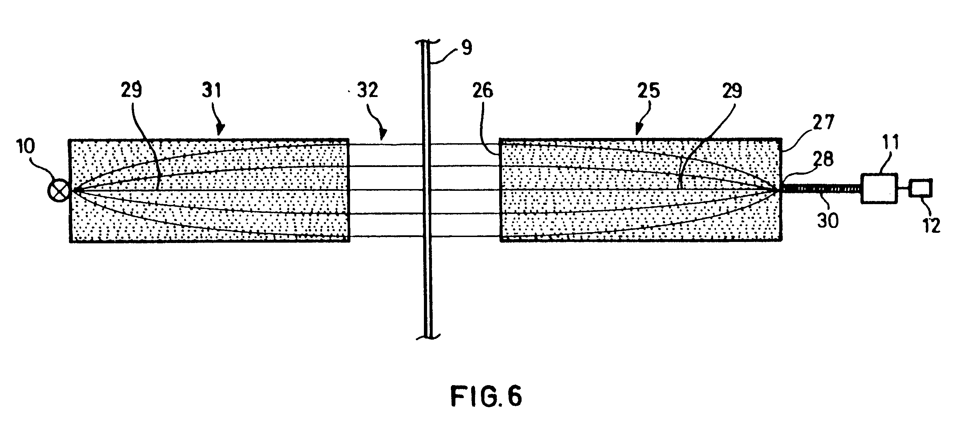

Die Ausführungsbeispiele der Fig. 6 bis 10 verwenden zylindrische Linsen mit einer parabolischen Verteilung des Brechungsindex. Diese Linsen werden im folgenden Selfoc-Linsen genannt (Selfoc ist ein eingetragenes Warenzeichen der Firma Nippon Sheet Glass Co., Ltd.)

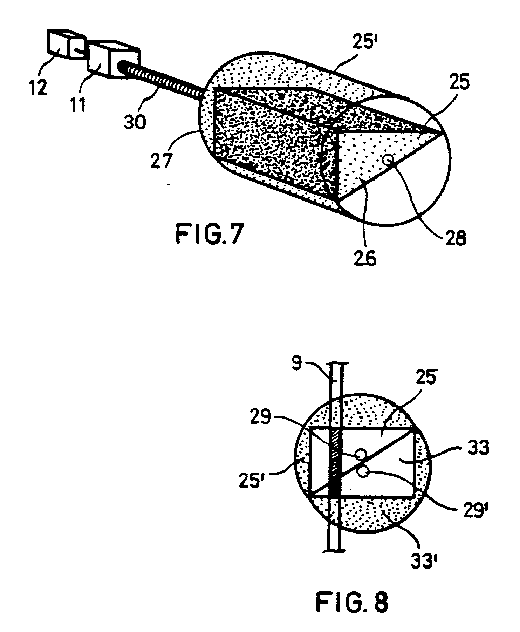

Zunächst sei auf die Fig. 6 und 7 Bezug genommen. Als Lichtquelle 10 wird eine punktförmige Lichtquelle verwendet, die nur auf einer Wellenlänge Licht emittiert. Beispielsweise kann hierzu eine Laserdiode verwendet werden. Dieses Licht wird in eine erste Selfoc-Linse 31 eingekoppelt, deren "Pitch"-Länge so gewählt ist, daß ein paralleles, homogenes Strahlenbündel 32 erzeugt wird. Die Lichtquelle ist dabei nahe dem Fokus der Selfoc-Linse 31 eingeordnet. Da ideale punktförmige Lichtquellen in der Praxis nicht existieren, muß die Lichtquelle wie z.B. eine Leuchtdiode einen gewissen Abstand vom Fokus haben, damit das Licht homogen in die Linse eintritt. Natürlich kann die Lichtquelle auch von der Selfoc-Linse 31 weiter entfernt angeordnet sein, wobei dann das Licht durch eine Lichtleitfaser zur Selfoc-Linse 31 geleitet wird. In der Sensoranordnung ist eine weitere Selfoc-Linse 25 vorgesehen, die koaxial zu dem Strahlenbündel 32 ausgerichtet ist, wobei die Laufdrahtelektrode 9 in diesem Strahlenbündel liegt und einen Schatten auf die Eintrittsebene 26 der Selfoc-Linse 25 wirft.

Im Ausführungsbeispiel der Fig. 6 und 7 läßt die Selfoc-Linse 25 nur einen Ausschnitt des Lichtstrahles durch, wobei dieser Ausschnitt die sich streng monoton ändernde geometrische Gestalt hat und im konkreten Ausführungsbeispiel die Gestalt eines Dreieckes. Diese dreieckförmige Linse wird aus einer zylindrischen Selfoc-Linse geschliffen, wobei darauf zu achten ist, daß die optische Achse 29 und damit auch der Fokuspunkt 28 noch innerhalb der dreieckförmigen Linse liegt. Wie besonders gut aus Fig. 7 zu erkennen ist, wird der zylindrische Teil 25' der Selfoc-Linse entfernt, so daß sie den dreieckförmigen Querschnitt hat. Diese dreieckförmige Linse 25 hat weiterhin die optischen Eigenschaften einer Selfoc-Linse und insbesondere die, daß das gesamte auf die Eintrittsfläche 26 fallende Licht in der ebenen Austrittsfläche 27 fokussiert wird. Je nach Lage des Schattens der Laufdrahtelektrode 9 kommt dann also mehr oder weniger Licht zum Fokus 28, wobei durch die dreieckförmige Gestalt der Linse 25 wieder die lineare Abhängigkeit der Lichtintensität im Fokus von der Verschiebung des Schattens in Meßrichtung gegeben ist. Im Ausführungsbeispiel der Fig. 6 wird im Fokus 28 der dreieckförmigen Linse 25 das Licht einer Lichtleitfaser 30 ausgekoppelt und von dort zu einem photoempfindlichen Wandlerelement 11 weitergeleitet. Dieses Wandlerelement 11 ist — in gleicher Weise wie bei den Ausführungsbeispielen der Fig. 1 bis 5 — an die Auswerteschaltung angeschlossen. Hier kommt auch der besondere Vorteil der Selfoc-Linsen zum tragen, nämlich daß aufgrund der ebenen Austrittsfläche 27 der Selfoc-Linse ein Ankoppeln eines Lichtleiters besonders effektiv gestaltet werden kann und daß praktisch keine Kopplungsverluste auftreten. Auch ist der Vorteil zu beachten, daß nur ein einziges photoelektrisches Wandlerelement 11 benötigt wird.

Im Ausführungsbeispiel der Fig. 8 werden — ähnlich wie bei Fig. 1 — zwei gegenläufige Dreiecke verwendet. Es werden also zwei Selfoc-Linsen 25' und 33' so geschliffen, daß sie dreieckförmige Linsen 25 und 33 bilden, die dann mit den Seiten, in denen die optische Achse 29 bzw. 29' angeordnet ist, aneinander leigen. Der in Fig. 8 gepunktet dargestellte Bereich wird also fortgeschliffen. Die optischen Achsen und damit die Fokuspunkte der beiden dreieckförmigen Linsen 25 und 33 liegen dabei in einem gewissen Abstand zueinander, so daß an jeden Fokuspunkt ein einzelner Lichtleiter angekoppelt werden kann. Diese beiden Lichtleiter werden dann an je ein photoempfindliches Wandlerelement angeschlossen, wobei die elektrischen Ausgangssignale dieser Wandlerelemente analog zum Ausführungsbeispiel der Fig. 4 einer Subtraktionsschaltung oder einer Divisionsschaltung zugeführt werden.

An dieser Stelle sei betont, daß in den Ausführungsbeispielen der Fig. 1 bis 3 als Lichtquelle ebenfalls eine punktförmige Lichtquelle mit Selfoc-Linse 31 gemäß Fig. 6 verwendet werden kann.

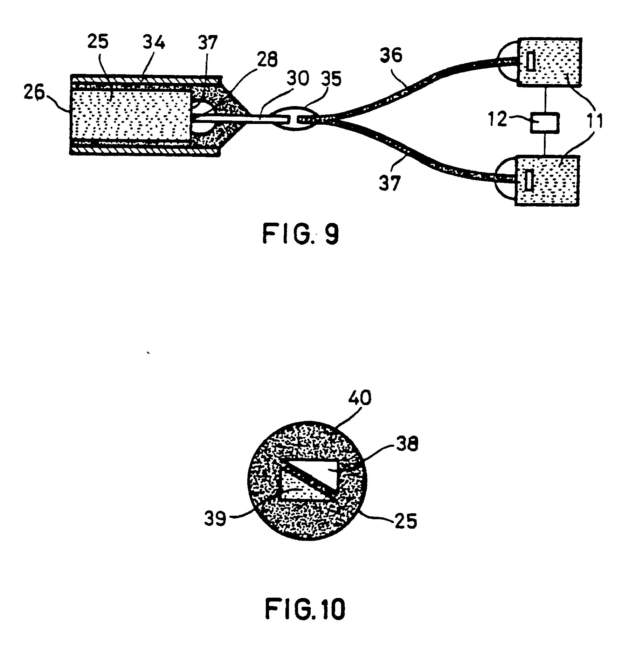

Das Ausführungsbeispiel der Fig. 9 und 10 verwendet eine zylindrische Selfoc-Linse 25, deren Eintrittsfläche 26 durch eine Maske mit einer sich streng monoton ändernden geometrischen Gestalt teilweise abgedunkelt ist. Bei einer Variante wird die Eintrittsfläche durch eine Maske so abgedunkelt, daß nur noch ein dreieckförmiger Bereich das Licht des Strahlenbündels durchläßt. Damit wird der gleiche Effekt wie mit einer dreieckförmig geschliffenen Linse erzielt. Zur Erhöhung bzw. zur Verdoppelung der Meßempfindlichkeit wird im Ausführungsbeispiel der Fig. 9 und 10 mit einer solchen Maskierung gearbeitet, daß wiederum zwei gegenläufige Dreiecke entstehen. Zur Unterscheidung der Meßsignale der beiden Dreiecke wird hier dann nicht mehr mit monochromatischem Licht gearbeitet sondern mit Licht, das mindestens zwei unterschiedliche Wellenlängen enthält. Auf die Eintrittsebene 26 werden dann zwei dreieckförmige Farbfilter 38 und 39 aufgebracht, die an die beiden unterschiedlichen Wellenlängen angepaßt sind. So läßt beispielsweise das Filter 38 nur Licht der einen Wellenlänge und das Filter 39 nur Licht der anderen Wellenlänge durch. Prinzipiell könnte die Lichtquelle auch weißes Licht ausstrahlen, das sämtliche Wellenlängen des Lichtspektrums enthält, sofern die Filter 38 und 39 auf Wellenlängen abgestimmt sind, die in diesem Spektrum enthalten sind. Der übrige, in Fig. 10 gepunktet dargestellte Bereich 40 der Eintrittsebene 26 ist wiederum abgedunkelt bzw. maskiert und läßt damit kein Licht in die zylindrische Selfoc-Linse 25 eintreten. Im Fokus 28 der Selfoc-Linse 25 wird dann ein einzelner Lichtleiter 30 angekoppelt. Dieser Lichtleiter transportiert die beiden von den Filtern 38 und 39 durchgelassenen Wellenlängen zu einem Strahlteiler 35 bekannter Bauart, wobei die beiden Ausgänge des Strahlteilers dann jeweils nur noch Licht der einen Wellenlänge führen. Im Ausführungsbeispiel der Fig. 9 sind die beiden Ausgänge des Strahlteilers 35 über zwei Lichtleitfasern 36 und 37 mit zwei Photodioden 11 gekoppelt, deren elektrisches Ausgangssignal dann wiederum mit der Auswerteschaltung 12 verbunden ist.

Da bei Selfoc-Linsen der Fokus nur für eine einzige Wellenlänge exakt in der Austrittsebene liegt, wenn nämlich die "Pitch"-Länge exakt lambda /4 ist, erhält man bei zwei Wellenlängen ähnlich wie bei herkömmlichen Linsen eine chromatische Aberration. Ist nun beispielsweise die Länge der Selfoc-Linse 25 exakt auf die eine der beiden Wellenlängen abgestimmt, so liegt der Fokus für die andere Wellenlänge nicht exakt in der Ausstrittsebene. Man erhält daher für diese andere Wellenlänge eine gewisse Fehlanpassung bei der Ankopplung an die Lichtleitfaser 30. Diese Fehlanpassung kann jedoch ohne weiteres korrigiert werden, beispielsweise durch Einstellung des Verstärkungsfaktors eines den beiden Photodioden 11 vorgeschalteten Verstärkers (vgl. Verstärker 13 in Fig. 3). Auch kann diese Korrektur rechnerisch in der Auswerteschaltung 12 vorgenommen werden. Auch ist es möglich, die beiden Wellenlängen der Lichtquelle mit unterschiedlichen Intensitäten auszustatten oder den Dämpfungsfaktor der beiden Filter 38 und 39 unterschiedlich zu wählen, so daß der durch die chromatische Aberration bedingte Fehler schon dort korrigiert wird. Schließlich ist auch möglich, die "Pitch"-Länge der Selfoc-Linse 25 so zu wählen, daß der Fokus beider Wellenlängen nicht in der Austrittsebene liegt, so daß man für beide Wellenlängen eine Fehlanpassung erhält, die bei geeigneter "Pitch"-Länge der Selfoc-Linse exakt gleichgroß ist.

In Fig. 9 ist noch zu erkennen, daß die Selfoc-Linse 25 in einer Hülse 34 gehalten ist, wobei die Lichtleitfaser 30 ebenfalls teilweise in diese Hülse hineinragt und die Selfoc-Linse 25 sowie die Lichtleitfaser 30 durch eine Vergußmasse in der Hülse gehalten sind. Gegebenenfalls kann die Lichtleitfaser auch noch zusätzlich mit einem optisch neutralen Kleber an der Selfoc-Linse befestigt sein.

## Patentansprüche

1. Funkenerosionsmaschine mit einer Laufdrahtelektrode (9) und einer optischen Meßeinrichtung zur Messung der Auslenkung der Laufdrahtelektrode, wobei die Meßeinrichtung eine Lichtquelle (10), eine Sensoranordnung (1, 11) zur Messung des durch die Laufdrahtelektrode (9) abgeschatteten Lichtstrahls (32) der Lichtquelle und eine der Sensoranordnung nachgeschaltete Auswerteschaltung (12) aufweist, dadurch gekennzeichnet, daß die Sensoranordnung (1, 11) so ausgebildet ist, daß sie eine von der relativen Lage der Laufdrahtelektrode (9) umkehrbar eindeutig abhängige Lichtmenge absorbiert.

2. Funkenerosionsmaschine nach Anspruch 1, dadurch gekennzeichnet, daß eine das Licht absorbierende wirksame Fläche der Sensoranordnung (1) eine sich streng monoton ändernde geometrische Gestalt hat.

3. Funkenerosionsmaschine nach Anspruch 2, dadurch gekennzeichnet, daß die das Licht absorbierende Fläche der Sensoranordnung (1) die Form eines Dreieckes hat.

4. Funkenerosionsmaschine nach einem der Ansprüche 1 bis 3, dadurch gekennzeichnet, daß die Sensoranordnung (1) eine Mehrzahl von Sensorelementen (2, 11 ; 25, 33 ; 38, 39) aufweist.

5. Funkenerosionsmaschine nach Anspruch 3, dadurch gekennzeichnet, daß die Ausgangssignale der Sensorelemente (2, 25) optisch zu einem Gesamtsignal aufsummiert werden.

6. Funkenerosionsmaschine nach Anspruch 4, dadurch gekennzeichnet, daß jedes Sensorelement (2, 11 ; 25, 33 ; 38, 39) ein photoelektrisches Wandlerelement (11) aufweist und daß die Auswerteschaltung (14-16) eine Summationsschaltung (14, 15) für die Ausgangssignale der photoelektrischen Wandlerelemente (11) zum Erzeugen des die relative Lage der Laufdrahtelektrode (9) anzeigenden Signales aufweist.

7. Funkenerosionsmaschine nach einem der Ansprüche 1 bis 6, dadurch gekennzeichnet, daß die Lichtquelle (10) ein Strahlenbündel (32) mit parallelem, homogenem Licht erzeugt und einen Schatten (8) der Laufdrahtelektrode auf die das Licht absorbierende wirksame Fläche der Sensoranordnung (1) wirft.

8. Funkenerosionsmaschine nach einem der Ansprüche 1 bis 7, dadurch gekennzeichnet, daß eine Mehrzahl von photoelektrischen Sensorelementen (2), deren Abmessungen kleiner als die Breite des Schattens (8) der Laufdrahtelektrode (9) sind, vorgesehen ist, und daß die photoelektrischen Sensorelemente (2, 11) in der Weise angeordnet sind, daß einem senkrecht zur Meßrichtung (x) verlaufenden Abschnitt der Sensoranordnung (1), der eine vorgegebene Länge in Meßrichtung hat, eine Anzahl von Sensorelementen (2, 11) zugeordnet ist, die vom Ort des Abschnittes in Meßrichtung (x) abhängt.

9. Funkenerosionsmaschine nach Anspruch 8, dadurch gekennzeichnet, daß die Sensoranordnung (1) eine über ihre Fläche im wesentlichen gleichbleibende Anzahl von Sensorelementen (2, 11) je Flächeneinheit aufweist und daß die Breite der Sensoranordnung (1) senkrecht zur Meßrichtung (x) vom Ort der Meßrichtung (x) abhängt.

10. Funkenerosionsmaschine nach Anspruch 8, dadurch gekennzeichnet, daß die Anzahl der Sensorelemente (2, 11) je Flächeneinheit von deren Ort in Meßrichtung (x) abhängt.

11. Funkenerosionsmaschine nach einem der Ansprüche 8 bis 10, dadurch gekennzeichnet, daß die Sensoranordnung (1) zwei Gruppen (6, 7) von Sensorelementen (2, 11) aufweist, die in der Weise angeordnet sind, daß ein senkrecht zur Meßrichtung (x) verlaufender Abschnitt mit einer vorgegebenen Länge in Meßrichtung der ersten Gruppe (6) eine Anzahl von Sensorelementen aufweist, die eine bestimmte Abhängigkeit vom Ort des Abschnittes in Meßrichtung (x) hat und daß ein senkrecht zur Meßrichtung (x) verlaufender Abschnitt mit einer vorgegebenen Länge in Meßrichtung (x) der zweiten Gruppe (7) eine Anzahl von Sensorelementen (2, 11) aufweist, die eine gegenüber der bestimmten Abhängigkeit umgekehrte Abhängigkeit vom Ort des Abschnittes in Meßrichtung (x) hat.

12. Funkenerosionsmaschine nach Anspruch 11, dadurch gekennzeichnet, daß jede der Gruppen (6, 7) die Form eines dreieckigen Feldes von Sensorelementen (2, 11) hat und daß die dreieckigen Felder gegensinnig zueinander ausgerichtet sind.

13. Funkenerosionsmaschine nach einem der Ansprüche 8 bis 12, dadurch gekennzeichnet, daß die Sensorelemente Lichtleitfasern (2) und photoelektrische Wandlerelemente (11) umfassen, daß die der Laufdrahtelektrode (9) zugewandten Enden der Lichtleitfasern (2) durch ein diese Lichtleitfasern (2) im wesentlichen parallel zueinander festlegendes Führungsteil (3) gehalten sind und daß an die anderen Enden der Lichtleitfasern (2) die photoelektrischen Wandlerelemente (11) angeschlossen sind.

14. Funkenerosionsmaschine nach Anspruch 13, dadurch gekennzeichnet, daß die photoelektrischen Wandlerelemente Photodioden (11) sind.

15. Funkenerosionsmaschine nach Anspruch 12, dadurch gekennzeichnet, daß die Auswerteschaltung (12) Additionsschaltungen (14, 15) und eine Subtraktionsschaltung (16) aufweist, daß jede der Additionsschaltungen (14, 15) jeweils die Ausgangssignale der Sensorelemente (2, 11) von je einer Gruppe (6, 7) aufaddiert und daß die Subtraktionsschaltung (16) ein die relative Lage der Laufdrahtelektrode anzeigendes elektrisches Signal erzeugt, das die Differenz der Ausgangssignale der Additionsschaltungen (14, 15) bildet.

16. Funkenerosionsmaschine nach einem der Ansprüche 1 bis 15, dadurch gekennzeichnet, daß im Strahlengang vor den photoelektrischen Wandlerelementen (11) eine optische Einrichtung (2, 25, 33 ; 38, 39) vorgesehen ist, die einen Ausschnitt des Lichtstrahles (32) zu den photoelektrischen Wandlerelementen durchläßt, und daß der Ausschnitt des Lichtstrahles die sich streng monoton ändernde geometrische Gestalt hat.

17. Funkenerosionsmaschine nach Anspruch 16, dadurch gekennzeichnet, daß die optische Einrichtung ein Bündel von Lichtleitfasern (2) ist.

18. Funkenerosionsmaschine nach Anspruch 16, dadurch gekennzeichnet, daß die optische Einrichtung eine dreieckförmige Linse (25) ist.

19. Funkenerosionsmaschine nach Anspruch 16, dadurch gekennzeichnet, daß die optische Einrichtung eine optische Linse (25) mit dreieckförmiger Maske (40) ist.

20. Funkenerosionsmaschine nach einem der Ansprüche 16, 18 oder 19, dadurch gekennzeichnet, daß die optische Einrichtung eine zylindrische Linse (23, 25) ist, deren Brechungsindex sich in Abhängigkeit vom Radius zur optischen Achse (29) im wesentlichen parabolisch ändert.

21. Funkenerosionsmaschine nach Anspruch 20, dadurch gekennzeichnet, daß die Linse (25) einen dreieckförmigen Querschnitt hat.

22. Funkenerosionsmaschine nach Anspruch 20, dadurch gekennzeichnet, daß die Eintrittsebene (26) der Linse mit einer dreieckförmigen Maske abgedeckt ist.

23. Funkenerosionsmaschine nach Anspruch 20, dadurch gekennzeichnet, daß die Eintrittsebene (26) der zylindrischen Linse mit mindestens einem dreieckförmigen Wellenlängenfilter abgedeckt und der Rest durch eine Maske (40) abgedunkelt ist.

24. Funkenerosionsmaschine nach einem der Ansprüche 21 bis 23, dadurch gekennzeichnet, daß ein Lichtleiter (30) an den Fokus (28) der Linse angekoppelt ist und daß der Fokus in der ebenen Austrittsfläche (27) der Linse liegt.

25. Funkenerosionsmaschine nach einem der Ansprüche 20, 23, 24, dadurch gekennzeichnet, daß die Eintrittsebene (26) der zylindrischen Linse (25) mit zwei dreieckförmigen Filtern (38, 39) abgedeckt ist, daß diese Filter (38, 39) unterschiedliche Wellenlängen des Lichtes durchlassen, daß der übrige Bereich der Eintrittsfläche der Linse (25) mit einer Maske (40) abgedeckt ist, daß die Lichtquelle (10) Licht mit mindestens den beiden durch die Filter (38, 39) bestimmten Wellenlängen emittiert und daß zwischen dem Ausgang der Linse und den photoelektrischen Wandlerelementen (11) ein Strahlteiler (35) vorgesehen ist, der das Licht in Licht mit den einzelnen Wellenlängen aufspaltet und diese separat zu je einem zugeordneten Wandlerelement (11) durchläßt.

26. Funkenerosionsmaschine nach Anspruch 25, dadurch gekennzeichnet, daß Einrichtungen vorgesehen sind, die eine durch chromatische Aberration bedingte Fehlanpassung an mindestens eine der beiden Wellenlängen korrigieren.

27. Funkenerosionsmaschine nach einem der Ansprüche 1 bis 26, dadurch gekennzeichnet, daß zur Erzeugung des parallelen, homogenen Strahlenbündels (32) eine punktförmige Lichtquelle (10) und eine daran angeschlossene zylinderförmige Linse (34) mit einem sich parabolisch ändernden Brechungsindex vorgesehen ist.

## Claims

1. Electrical discharge machine having a moving wire electrode (9) and an optical measuring device for measuring the excursion of the moving wire electrode, with the measuring device having a light source (10), a sensor arrangement (1, 11) for measuring the light beam (32) of the light source shaded by the moving wire electrode (9) and an evaluation circuit (12) connected downstream of the sensor arrangement, characterised in that the sensor arrangement (1, 11) is designed so as to absorb a light quantity which is reversibly clearly dependent upon the relative position of the moving wire electrode (9).

2. Electrical discharge machine according to claim 1, characterised in that an effective surface of the sensor arrangement (1) which absorbs the light has a strictly monotonically varying geometric shape.

3. Electrical discharge machine according to claim 2, characterised in that the light-absorbing surface of the sensor arrangement (1) is in the shape of a triangle.

4. Electrical discharge machine according to one of claims 1 to 3, characterised in that the sensor arrangement (1) has a plurality of sensor elements (2, 11 ; 25, 33 ; 38, 39).

5. Electrical discharge machine according to claim 3, characterised in that the output signals of the sensor elements (2, 25) are optically summed to form a total signal.

6. Electrical discharge machine according to claim 4, characterised in that each sensor element (2, 11 ; 25, 33 ; 38, 39) has a photoelectric transducer element (11), and that the evaluation circuit (14-16) has a summing circuit (14, 15) for the output signals of the photoelectric transducer elements (11) for generating the signal indicating the relative position of the moving wire electrode (9).

7. Electrical discharge machine according to one of claims 1 to 6, characterised in that the light source (10) produces a ray beam (32) of parallel homogeneous light and throws a shadow (8) of the moving wire electrode onto the light-absorbing effective surface of the sensor arrangement (1).

8. Electrical discharge machine according to one of claims 1 to 7, characterised in that a plurality of photoelectric sensor elements (2) are provided, whose dimensions are smaller than the width of the shadow (8) of the moving wire electrode (9), and that the photoelectric sensor elements (2, 11) are arranged in such a way that there is, associated with a portion of the sensor arrangement (1) extending at right angles to the measuring direction (x) and having a predetermined length in measuring direction, a number of sensor elements (2, 11) which depends upon the location of the portion in measuring direction (x).

9. Electrical discharge machine according to claim 8, characterised in that the sensor arrangement (1) has a basically constant number of sensor elements (2, 11) per unit of area over its surface, and that the width of the sensor arrangement (1) at right angles to the measuring direction (x) depends upon the location of the measuring direction (x).

10. Electrical discharge machine according to claim 8, characterised in that the number of sensor elements (2, 11) per unit of area depends upon their location in measuring direction (x).

11. Electrical discharge machine according to one of claims 8 to 10, characterised in that the sensor arrangement (1) has two groups (6, 7) of sensor elements (2, 11) arranged in such a way that a portion of the first group (6) extending at right angles to the measuring direction (x) and having a predetermined length in measuring direction has a number of sensor elements which has a defined dependence upon the location of the portion in measuring direction (x) and that a portion of the second group (7) extending at right angles to the measuring direction (x) and having a predetermined length in measuring direction (x) has a number of sensor elements (2, 11) which has a, compared to the defined dependence, inverse dependence upon the location of the portion in measuring direction (x).

12. Electrical discharge machine according to claim 11, characterised in that each of the groups (6, 7) is in the shape of a triangular panel of sensor elements (2, 11) and that the triangular panels are aligned in opposite directions to one another.

13. Electrical discharge machine according to one of claims 8 to 12, characterised in that the sensor elements comprise optical fibres (2) and photoelectric transducer elements (11), that the ends of the optical fibres (2) facing the moving wire electrode (9) are held by a guide part (3) which fixes said optical fibres (2) substantially parallel to one another, and that the photoelectric transducer elements (11) are connected to the other ends of the optical fibres (2).

14. Electrical discharge machine according to claim 13, characterised in that the photoelectric transducer elements are photodiodes (11).

15. Electrical discharge machine according to claim 12, characterised in that the evaluation circuit (12) has summing circuits (14, 15) and a subtracting circuit (16), that each of the summing circuits (14, 15) adds up the output signals of the sensor elements (2, 11) of a respective group (6, 7), and that the subtracting circuit (16) produces an electric signal, which indicates the relative position of the moving wire electrode and is formed by the difference of the output signals of the summing circuits (14, 15).

16. Electrical discharge machine according to one of claims 1 to 15, characterised in that there is provided in the path of rays in front of the photoelectric transducer elements (11) an optical device (2, 25, 33 ; 38, 39) which transmits a portion of the light beam (32) to the photoelectric transducer elements, and that the portion of the light beam has the strictly monotonically varying geometric shape.

17. Electrical discharge machine according to claim 16, characterised in that the optical device is a bundle of optical fibres (2).

18. Electrical discharge machine according to claim 16, characterised in that the optical device is a triangular lens (25).

19. Electrical discharge machine according to claim 16, characterised in that the optical device is an optical lens (25) having a triangular mask (40).

20. Electrical discharge machine according to one of claims 16, 18 or 19, characterised in that the optical device is a cylindrical lens (23, 25) whose refractive index varies substantially parabolically in dependence upon the radius to the optical axis (29).

21. Electrical discharge machine according to claim 20, characterised in that the lens (25) has a triangular cross-section.

22. Electrical discharge machine according to claim 20, characterised in that the entrance plane (26) of the lens is covered by a triangular mask.

23. Electrical discharge machine according to claim 20, characterised in that the entrance plane (26) of the cylindrical lens is covered by at least one triangular band filter and the rest is blacked out by a mask (40).

24. Electrical discharge machine according to one of claims 21 to 23, characterised in that a light guide (30) is coupled to the focus (28) of the lens and that the focus lies in the plane exit surface (27) of the lens.

25. Electrical discharge machine according to one of claims 20, 23, 24, characterised in that the entrance plane (26) of the cylindrical lens (25) is covered by two triangular filters (38, 39), that said filters (38, 39) transmit different wavelengths of the light, that the remaining region of the entrance surface of the lens (25) is covered by a mask (40), that the light source (10) emits light having at least the two wavelengths determined by the filters (38, 39), and that there is provided between the exit of the lens and the photoelectric transducer elements (11) a beam splitter (35) which splits the light into light having the individual wavelengths and transmits each of these separately to an associated transducer element (11).

26. Electrical discharge machine according to claim 25, characterised in that devices are provided which correct mismatching, caused by chromatic aberration, to at least one of the two wavelengths.

27. Electrical discharge machine according to one of claims 1 to 26, characterised in that, to produce the parallel homogeneous ray beam (32), there is provided a point source of light (10) and, connected thereto, a cylindrical lens (34) having a parabolically varying refractive index.

## Revendications

1. Machine à électro-érosion comportant un fil électrode mobile (9) et un dispositif de mesure optique destiné à mesurer la déviation du fil électrode mobile, le dispositif de mesure présentant une source de lumière (10), un dispositif capteur (1, 11) destiné à la mesure du rayon lumineux (32) émanant de la source de lumière, occulté par le fil électrode mobile (9), et un dispositif d'évaluation (12) mis en aval du capteur, caractérisée en ce que le dispositif capteur (1, 11) est conformé de façon telle qu'il absorbe une quantité de lumière qui dépend de façon bi-univoque de la position relative du fil électrode mobile (9).

2. Machine à électro-érosion selon la revendication 1, caractérisée en ce qu'une surface active absorbant la lumière du dispositif capteur (1) a une configuration géométrique qui varie de façon strictement monotone.

3. Machine à électro-érosion selon la revendication 2, caractérisée en ce que la surface absorbant la lumière du dispositif capteur (1) a une forme d'un triangle.

4. Machine à électro-érosion selon l'une des revendications 1 à 3, caractérisée en ce que le dispositif capteur (1) présente une pluralité d'éléments capteurs (2, 11 ; 25, 33 ; 38, 39).

5. Machine à électro-érosion selon la revendication 3, caractérisée en ce que les signaux de sortie des éléments capteurs (2, 25) sont additionnés optiquement pour former un signal global.

6. Machine à électro-érosion selon la revendication 4, caractérisée en ce que chaque élément capteur (2, 11 ; 25, 33 ; 38, 39) présente un élément transducteur photo-électrique (11) et en ce que le circuit d'évaluation (14 à 16) présente un circuit de sommation (14, 15) destiné aux signaux de sortie des éléments transducteurs (11) pour donner le signal représentatif de la position du fil électrode mobile (9).

7. Machine à électro-érosion selon l'une des revendications 1 à 6, caractérisée en ce que la source de lumière (10) envoie un faisceau (32) de rayons parallèles de lumière homogène et projette l'ombre (8) du fil électrode mobile sur la surface active absorbant la lumière, du dispositif capteur (1).

8. Machine à électro-érosion selon l'une des revendications 1 à 7, caractérisée en ce que l'on prévoit une pluralité d'éléments capteurs photo-électriques (2) dont les dimensions sont inférieures à la largeur de l'ombre (8) du fil électrode mobile (9), et en ce que les éléments capteurs photo-électriques (2, 11) sont disposés de façon telle qu'à une section du dispositif capteur (1) qui est perpendiculaire à la direction de mesure (x) et qui a une longueur prédéterminée dans la direction de mesure, soit affecté un nombre d'éléments capteurs (2, 11) qui dépend de la position de la section dans la direction de mesure (x).

9. Machine à électro-érosion selon la revendication 8, caractérisée en ce que le dispositif capteur (1) présente, sur sa surface, un nombre sensiblement constant d'éléments capteurs (2, 11) par unité de surface et en ce que la largeur du dispositif capteur (1) perpendiculairement à la direction de mesure (x) est fonction du lieu de la direction de mesure (x).

10. Machine à électro-érosion selon la revendication 8, caractérisé en ce que le nombre d'éléments capteurs (2, 11) par unité de surface est fonction de l'emplacement de ceux-ci dans la direction de mesure.

11. Machine à électro-érosion selon l'une des revendications 8 à 10, caractérisée en ce que le dispositif capteur (1) présente deux groupes (6, 7) d'éléments capteurs (2, 11) qui sont disposés de façon telle qu'une section du premier groupe (6) qui s'étend perpendiculairement à la direction de mesure (x), sur une longueur prédéterminée dans la direction de mesure, présente un nombre d'éléments capteurs qui est fonction d'une manière définie de la position de la section dans la direction de mesure (x) et en ce qu'une section du deuxième groupe (7) qui s'étend perpendiculairement à la direction de mesure (x), sur une longueur prédéterminée à la direction de mesure (x), présente un nombre d'éléments capteurs (2, 11) qui varie en fonction de l'emplacement de la partie dans la direction de mesure (x) selon la fonction inverse de la fonction déterminée.

12. Machine à électro-érosion selon la revendication 11, caractérisée en ce que chacun des groupes (6, 7) a la forme d'un champ triangulaire d'éléments capteurs (2, 11) et en ce que les champs triangulaires sont disposés en sens inverse l'un de l'autre.

13. Machine à électro-érosion selon l'une des revendications 8 à 12, caractérisée en ce que les éléments capteurs comprennent des fibres conductrices de lumière ou fibres optiques (2) et des éléments transducteurs photo-électriques (11), en ce que les extrémités des fibres optiques (2) dirigées vers le fil électrode mobile (9) sont maintenues au moyen d'une pièce de guidage (3) qui les fixe sensiblement parallèlement entre elles et en ce qu'à leurs autres extrémités, les fibres optiques (2) sont raccordées à des éléments transducteurs photo-électriques (11).

14. Machine à électro-érosion selon la revendication 13, caractérisée en ce que les éléments transducteurs photo-électriques sont des photodiodes (12).

15. Machine à électro-érosion selon la revendication 13, caractérisée en ce que le circuit d'évaluation (12) présente des circuits d'addition (14, 15) et un circuit de soustraction (16), en ce que chacun des circuits d'addition (14, 15) additionne les signaux de sortie des éléments capteurs (2, 11) provenant de chacun des groupes (6, 7) et en ce que le circuit de soustraction (16) produit un signal électrique représentatif de la position relative du fil électrode mobile, qui est constitué par la différence des signaux de sortie des circuits d'addition (14, 15).

16. Machine à électro-érosion selon l'une des revendications 1 à 15, caractérisée en ce que dans le parcours du rayon en amont des éléments transducteurs photo-électriques (11), on prévoit un dispositif optique (2, 25, 33 ; 38, 39) qui laisse passer une fraction du rayon de lumière (32) jusqu'aux éléments transducteurs photo-électriques et en ce que la fraction du rayon de lumière (9) a une forme géométrique à variation strictement monotone.

17. Machine à électro-érosion selon la revendication 16, caractérisée en ce que le dispositif optique est un faisceau de fibres optiques (2).

18. Machine à électro-érosion selon la revendication 16, caractérisée en ce le dispositif optique est une lentille triangulaire.

19. Machine à électro-érosion selon la revendication 16, caractérisée en ce que le dispositif optique est une lentille optique (25) munie d'un cache triangulaire (40).

20. Machine à électro-érosion selon l'une des revendications 16, 18 ou 19, caractérisée en ce que le dispositif optique est une lentille cylindrique (23, 25) dont l'indice de réfraction varie en fonction du rayon par rapport à l'axe optique (29) de façon sensiblement parabolique.

21. Machine à électro-érosion selon la revendication 20, caractérisée en ce que la lentille (25) a une section transversale triangulaire.

22. Machine à électro-érosion selon la revendication 20, caractérisée en ce que le plan d'entrée (26) de la lentille est recouvert par un cadre triangulaire.

23. Machine à électro-érosion selon la revendication 20, caractérisée en ce que le plan d'entrée (26) de la lentille cylindrique est recouvert par au moins un filtre triangulaire de longueur d'onde et en ce que le reste est obscurci par un cache (40).

24. Machine à électro-érosion selon l'une des revendications 21 à 23, caractérisée en ce qu'un conducteur de lumière (30) est couplé au foyer (28) de la lentille et en ce que le foyer est situé dans le plan de sortie (27) de la lentille.

25. Machine à électro-érosion selon l'une des revendications 20, 23, 24, caractérisée en ce que le plan d'entrée (26) de la lentille cylindrique (25) est recouvert au moyen de deux filtres triangulaires (38, 39), en ce que ces filtres (38, 39) laissent passer des longueurs d'onde différentes de la lumière, en ce que la zone restante de la surface d'entrée de la lentille (25) est recouverte par un cache (40), en ce que la source de lumière (10) émet de la lumière comportant au moins les deux longueurs d'onde accordées aux filtres (38, 39), et en ce qu'entre la sortie de la lentille et les éléments transducteurs photo-électriques (11), on prévoir un diviseur de rayon (35) qui divise la lumière en une lumière avec les diverses longueurs d'onde et fait parvenir ces composantes de longueur d'onde séparément à chacun des éléments transducteurs (11) qui leurs sont associés.

26. Machine à électro-érosion selon la revendication 25, caractérisée en ce que l'on prévoit des dispositifs qui corrigent une aberration chromatique causée par un défaut d'adaptation pour au moins une des deux longueurs d'onde.

27. Machine à électro-érosion selon l'une des revendications 1 à 26, caractérisée en ce qu'en vue de produire le faisceau homogène (32) de rayons parallèles, on prévoit une source de lumière (10) ponctuelle et une lentille cylindrique (34) associée à celle-ci, lentille dont l'indice de réfraction varie selon une fonction parabolique.

FIG.1

FIG.2

FIG. 3

FIG. 4

14

**FIG. 5**

FIG.6

EP 0 312 056 B1

FIG.7

FIG. 8

FIG. 9

FIG.10